(19) Europäisches Patentamt / European Patent Office / Office européen des brevets

(11) **EP 4 089 883 B1**

(12) **EUROPEAN PATENT SPECIFICATION**

(45) Date of publication and mention
of the grant of the patent:
**19.04.2023 Bulletin 2023/16**

(21) Application number: **22161116.3**

(22) Date of filing: **09.03.2022**

(51) International Patent Classification (IPC):
***H02K 1/16*** *(2006.01)*

(52) Cooperative Patent Classification (CPC):
**H02K 1/165;** H02K 2213/03

(54) **ELECTRIC MACHINE**

ELEKTRISCHE MASCHINE

MACHINE ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.05.2021 JP 2021081027**

(43) Date of publication of application:
**16.11.2022 Bulletin 2022/46**

(73) Proprietor: **Suzuki Motor Corporation
Hamamatsu-shi, Shizuoka 432-8611 (JP)**

(72) Inventors:
• **MORI, Fumiya
Hamamatsu-shi, 432-8611 (JP)**
• **AKAKI, Ryosuke
Hamamatsu-shi, 432-8611 (JP)**

(74) Representative: **Henkel & Partner mbB
Patentanwaltskanzlei, Rechtsanwaltskanzlei
Maximiliansplatz 21
80333 München (DE)**

(56) References cited:
**EP-A1- 3 457 536          WO-A1-2008/044703
US-A1- 2013 342 070**

## Description

**[Technical Field]**

The present invention relates to electric machines.

**[Background Art]**

JP 2011-130556 A discloses a stator. The known stator includes split stator cores, each having a yoke portion and a tooth portion, conductors wound around the tooth portion and a flux barrier. The flux barrier includes a pressing member for pressing the conductors against the yoke portion. The pressing member includes a non-magnetic annular element coupled to the tip portion of the tooth portion and a magnetic annular element coupled to the tooth portion. The magnetic annular element is disposed between the non-magnetic annular element and the conductors to retain the conductors.

US 2013/342 070 A1 discloses a stator core having teeth with a single protrusion at the tooth end.

EP 3 457 536 A1 discloses a stator core having teeth with indentations in the tooth end.

WO 2008/044 703 A1 discloses a stator core having teeth with increasing width thereof. The widest part at the end of the teeth can be seen as a flange with a protrusion.

In the electric machine, the magnetic annular element attracts the magnetic flux flow from the rotor to avoid its interaction with the conductors. Moreover, the non-magnetic annular element is arranged to keep the magnetic annular element away from the outer periphery of the rotor. This arrangement is effective in reducing the occurrence of the saturation in the magnetic annular element during motor operation. This can reduce the eddy current loss.

[Prior Art]

[Patent Literature]

Patent Literature 1: JP 2011-130556 A
Patent Literature 2: US 2013/342 070 A1
Patent Literature 3: EP 3 457 536 A1
Patent Literature 4: WO 2008/044 703 A1

**[Summary of Invention]**

[Technical Problem]

However, the known electric machine has the pressing member, which is a separate part, and requires work to couple the pressing member to the tooth portion of each stator core, adding to its product cost. Moreover, the non-magnetic annular element of the pressing member will hamper entry of the magnetic flux flow from the rotor during motor operation, so that the amount of magnetic flux flow through the magnetic annular element may become less than the amount of magnetic flux flow through the adjacent tooth portion. This causes a change in torque during motor operation, making it difficult to reduce the torque ripple.

An object of the present invention is to provide an electric machine capable of reducing the eddy current and torque ripple without adding to its product cost.

[Solution to Problem]

There is provided an electric machine comprising: a stator surrounding a rotor and including a stator core, the stator core including an annular yoke portion and stator teeth that extend radially inward from the yoke portion to define slots sized to house conductors. Each of the stator teeth includes a tooth main body, and a flange extending from the innermost end of the tooth main body in a radial direction toward the geometric centerline of the rotor, the tooth main bodies of the adjacent two of the stator teeth defining one of the slots therebetween. The flange includes a flange base extending from the innermost end of the tooth main body in the radial direction toward the geometric centerline of the rotor and a flange-base protrusion extending from the flange base in one and the opposite circumferential directions along the inner periphery of the stator. The flange-base protrusion includes a first protruded part at the innermost end of the flange and a second protruded part located radially outward from the first protruded part in a radial direction away from the geometric centerline of the rotor.

[Advantageous Effect of Invention]

The present disclosure provides an electric machine capable of reducing the eddy current and torque ripple without adding to its product cost.

**[Brief Description of Drawings]**

FIG. 1 is an axial cross sectional view of an electric machine.
FIG. 2 is an enlarged cross sectional view of a portion of the electric machine.
FIG. 3 is an enlarged cross sectional view of a portion of the electric machine, wherein magnetic flux-flow lines are indicated and wherein the flux-flow lines are generated by the combined effect of rotor permanent magnets and stator winding currents during motor operation with the maximum load.
FIG. 4 is a plot showing torque ripple rate for various values of L2/L1 for the electric machine.
FIGS. 5A to 5D include views similar to FIG. 3, with flux distributions in FIGS. 5A to 5D developed by the combined effect of rotor permanent magnets and stator winding currents during motor operation using different stator teeth.

FIG. 6 is an end view of a portion of a preferred embodiment of a stator tooth, with two flux lines.

FIG. 7 is an end view of a portion of a less preferred embodiment of a stator tooth with two flux lines.

[Detailed Description]

Disclosed is an electric machine comprising: a stator surrounding a rotor and including a stator core, the stator core including an annular yoke portion and stator teeth that extend radially inward from the yoke portion to define slots sized to house conductors. Each of the stator teeth includes a tooth main body, and a flange extending from the innermost end of the tooth main body in a radial direction toward the geometric centerline of the rotor, the tooth main bodies of the adjacent two of the stator teeth defining one of the slots therebetween. The flange includes a flange base extending from the innermost end of the tooth main body in the radial direction toward the geometric centerline of the rotor and a flange-base protrusion extending from the flange base in one and the opposite circumferential directions along the inner periphery of the stator. The flange-base protrusion includes a first protruded part at the innermost end of the flange and a second protruded part located radially outward from the first protruded part in a radial direction away from the geometric centerline of the rotor. The present disclosure provides an electric machine capable of reducing the eddy current and torque ripple without adding to its product cost.

[Embodiment(s)]

Referring to the accompanying drawings, description of an electric machine that embodies the present invention will follow.

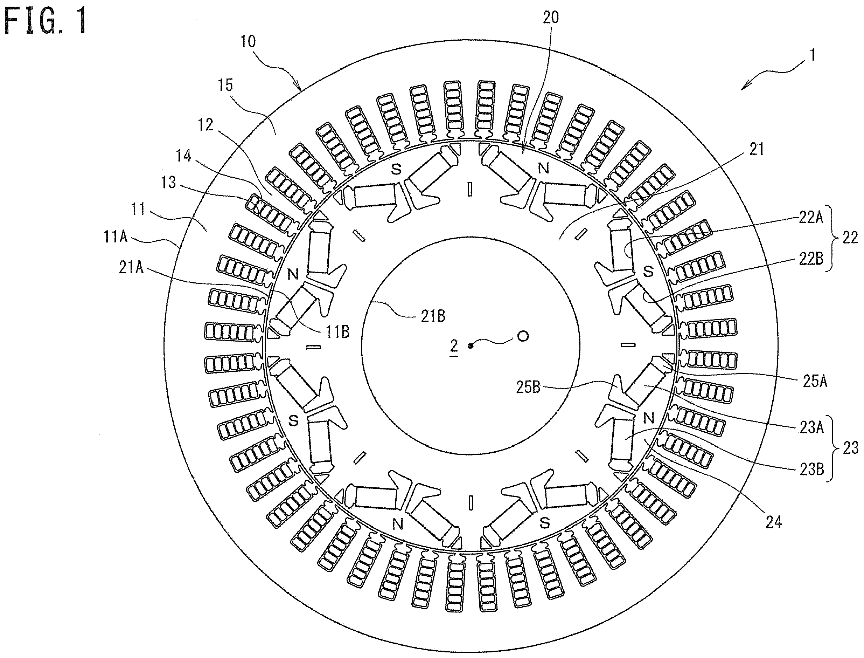

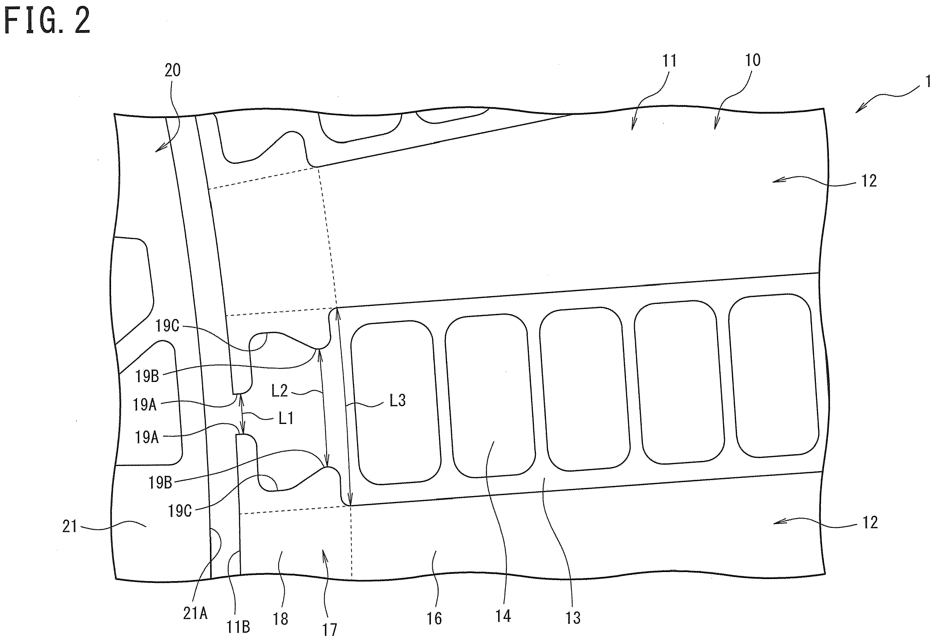

Now referring to FIGS. 1 and 2, an electric machine 1 is shown. The electric machine 1 is an Interior Permanent Magnet Synchronous Motor (IPMSM) capable of acting as a traction motor in a hybrid vehicle or an electric vehicle.

The electric machine 1 includes a stator 10 surrounding a rotor 20. The rotor 20 is mechanically connected to a shaft 2 and rotatable about the geometrical centerline indicated at O. The stator 10 has its outer periphery 11A and inner periphery 11B (see FIG. 2). The rotor 20 has its outer periphery 21A (see FIG. 2). The rotor 20 is separated from the stator 10 with an air gap between them. As best seen in FIG. 2, the air gap is created between the inner periphery 11B and the outer periphery 21A. The electric machine 1 may be housed in a housing (not shown).

The stator 10 includes a ferrous metal stator core 11. The stator core 11 includes axially stacked multiple laminations. The laminations may be formed of ferrous metal and high-permeability and magnetic. They may be annular in form. When they are stacked in axial relationship, they form a cylindrical body.

The stator core 11 includes an annular yoke portion 15 and multiple stator teeth 12 that extend radially inward from the yoke portion 15 to define multiple stator slots 13 sized to house conductors 14. The stator teeth 12 may be of uniform width and circumferentially distributed about the inner periphery 11B.

In a conventional manner, the phrase "a radial direction" is used to mean a direction orthogonal to the above-mentioned geographical centerline O. The phrase "radial inside" is used to mean inside a cylindrical body about the geographical centerline O, and the phrase "radial outside" is used to mean outside the cylindrical body. The phrase "circumferential direction" is used to mean a direction tangential to a circle approximating the inner periphery of one of the annular laminations constituting the stator 10.

The multiple stator slots 13 may be equally spaced about the inner periphery 11B of the stator 10. Referring to FIG. 2, a stator slot 13 may have a plurality of conductors 14. The conductors 14 may be any shape. The conductors 14 may be circular, square, solid, or a combination thereof. The conductors 14 may be bundled in phases, for example, three phases, namely W, V and U to provide distributed windings. Each phase may have a plurality of conductors 14.

A rotating magnetic field is produced within the stator 10 using a three-phase AC power supply for the stator conductors 14. The rotating magnetic field interacts with the rotor 20, then the rotor 20 will follow and rotate with the magnetic field of the stator 10.

The rotor 20 may include a ferrous metal rotor core 21, multiple pairs of permanent magnets 23 and multiple magnetic poles 24.

The rotor core 21 includes axially stacked multiple laminations. The laminations may be formed of ferrous material. They may be annular in form. When they are stacked in axial relationship, they form a cylindrical body. The rotor core 21 may include multiple pairs of pockets 22, which are spaced about the outer periphery 21A. The rotor core 21 has its inner periphery 21B stationary relative to the shaft 2.

Pockets 22A and 22B of each pair 22 are located in a "V" shape configuration radially outward toward the stator 10.

The pockets 22A and 22B of each pair 22 are sized to house permanent magnets 23A and 23B of the associated one of the pairs 23. The magnets 23A and 23B of each pair 23 are located in a "V" shape configuration radially outward toward the stator 10. The permanent magnets 23A and 23B are paired to form magnetic poles 24.

As best seen in FIG. 1, the rotor core 21 has eight (8) rotor poles 24 in close proximity of the stator 10, in which a north (N) pole 24 and a south (S) pole are alternately arranged along the outer periphery 21A. The magnetic poles 24 Each pole 24 is defined by and between two magnets 23A and 23B of the associated one of the pairs 23. With their north (N) pole facing each other, the two permanent magnets 23A and 23B of pair forms the north (N) pole, and with their south (S) pole facing each other, the two permanent magnets 24A and 23B of another pair forms the south (S) pole.

The polarity developed by one paired permanent magnets 23A and 23B is reversed from the polarity developed by the adjacent paired permanent magnets 23A and 23B to provide alternate arrangement of north (N) and south (S) poles along the outer periphery 21A of the rotor 20.

As described, the rotor 20 has a reverse salient pole structure including eight (8) pairs of permanent magnets 23A and 23B.

To understand the motor operation of the electric machine 1 using the rotor 20 of the above-described type, it is important to understand permanent magnet (PM) motor d-axis and q-axis inductance. The d-axis, known as the direct axis, inductance is the inductance measured when magnetic flux passes through the magnetic poles. The q-axis, known as the quadrature axis, inductance is the inductance measured when magnetic flux passes between the magnet poles. By convention, the quadrature axis will lead the direct axis electrically by 90 degrees. The electric machine 1 has a larger q-axis inductance than the d-axis inductance during motor operation because the flux path travelling through the quadrature axis does not cross the embedded magnets 23A and 23B.

In the reverse salient pole structure, the difference between the d-axis inductance and the q-axis inductance can produce reactance torque in addition to magnet torque, increasing the torque density in the electric machine 1.

The rotor core 21 is formed with first and second flux barriers 25A and 25B for each of the permanent magnets 23A and 23B of the associated one pair 23. The first and second flux barriers 25A and 25B are voids designed to reduce sneak magnetic flux paths.

The first flux barrier 25A is situated adjacent to the radial outer periphery of each of the permanent magnets 23A and 23B of a pair 23. The second flux barrier 25B is situated adjacent to the radial inner periphery of each of the permanent magnets 23A and 23B of the pair 23. Two second flux barriers 25B are situated between the radial inner peripheries of the permanent magnets 23A and 23B of the pair 23.

The first and second flux barriers 25A and 25B communicate with each other through each of the pockets 22A and 22B of a pair 23, wherein the permanent magnets 23A and 23B are not included to form an integrated space.

Referring now to FIG. 2, the stator 10 surrounds the rotor 20 and includes the stator core 11. The stator core 11 includes the yoke portion 15 and stator teeth 12 that extend radially inward from the yoke portion 15 to define stator slots 13 sized to house conductors 14. The stator core 11 is formed of ferromagnetic metal. Each of the stator teeth 12 includes a tooth main body 16, and a flange 17 extending from the innermost end of the tooth main body 16 in a radial direction toward the geometric centerline O of the rotor 20. The tooth main bodies 16 of the adjacent two of the stator teeth 12 define one of the stator slots 13 therebetween. As described, the flange 17 is an integral part of each of the stator teeth 12 extending from the yoke portion 15. Thus, the flange 17 provides a path for the magnetic flux-flow lines.

The flange 17 includes a flange base 18 extending from the innermost end of the tooth main body 16 in the radial direction toward the geometric centerline O of the rotor 20. The flange 17 also includes a flange-base protrusion 19 extending from the flange base 18 in one and the opposite circumferential directions along the inner periphery 11B of the stator 10. The flange-base protrusion 19 includes a first protruded part 19A at the innermost end of the flange 17 and a second protruded part 19B located radially outward from the first protruded part 19A in a radial direction away from the geometric centerline O of the rotor 20.

Because it extends from the flange base 18 in one and the opposite circumferential directions along the inner periphery 11B of the stator 10, the first protruded part 19A can secure a big circular width facing the outer periphery 21A of the rotor 20 and reduce entry of the magnetic flux lines into the associated slot 13. Because it extends from the flange base 18 in the one and the opposite circumferential directions along the inner periphery 11B of the stator 10, the second protruded part 19B is wider than the main body 16 such that the second protruded part 19B of one of the stator teeth 12 cooperates with the second protruded part 19B of the adjacent stator tooth 12 to retain the conductors 14 housed in the associated stator slot 13 to keep the conductors 14 away from the outer periphery 21A of the rotor 20 to establish a predetermined gap between the conductors 14 and the outer periphery 21A of the rotor 20.

In FIG. 2, the boundary between each tooth main body 16 and the associated flange 17 is indicated by the circular broken line. The boundary between each flange base 18 and the associated flange-base protrusion 19 is indicated by the radial broken line. These broken lines are phantom lines to make the boundaries clear.

The flange-base protrusion 19 includes a connection surface 19C extending between the second protruded part 19B and the first protruded part 19A to provide smooth and continuous connection between the second protruded part 19B and the first protruded part 19A. The connection surface 19C is a concave curved surface recessed inward the flange-base protrusion 19 along the inner periphery 11B of the stator 10. With this concave curved connection surface 19C, the base of the second protruded part 19B and the base of the first protruded part 19A are connected in a way to draw an arc.

The first protruded part 19A extends from the flange base 18 in one and the opposite circumferential directions more than the second protruded part 19B so that a distance by which the first protruded part 19A of one of the stator teeth 12 is spaced apart from the first protruded part 19A of the adjacent stator tooth 12 may be less than a distance by which the second protruded part 19B of the one stator tooth 12 is spaced apart from the second protruded part 19B of the adjacent stator tooth 12.

The first protruded part 19A of one of the stator teeth 12 is spaced apart from the first protruded part 19A of the adjacent stator tooth 12 by a distance that is indicative of a slot opening width L1 of the stator slot 13, and the second protruded part 19B of the one stator tooth 12 is spaced apart from the second protruded part 19B of the adjacent stator tooth 12 by a distance that is indicative of a necked portion width L2 of the stator slot 13, and wherein $2.9 < L2/L1 < 6.2$.

The tooth main body 16 of the one stator tooth 12 is spaced apart from the tooth main body 16 of the adjacent stator tooth 12 by a distance that is indicative of a slot width L3 of the stator slot 13, and wherein $9.6 < L3/L1 < 24$.

As described, in the electric machine 1 according to the preferred embodiment, the stator 10 surrounds the rotor 20 and includes the stator core 11. The stator core 11 includes an annular yoke portion 15 and stator teeth 12 that extend radially inward from the yoke portion 15 to define stator slots 13 sized to house conductors 14 so the stator core 11 provides a path for the magnetic flux-flow lines. Each of the stator teeth 12 includes the tooth main body 16, and the flange 17, which extends from the innermost end of the tooth main body 16 in a radial direction toward the geometric centerline O of the rotor 20. The tooth main bodies 16 of the adjacent two of the stator teeth 12 define one of the stator slots 13 therebetween. The flange 17 includes the flange base 18 extending from the innermost end of the tooth main body 16 in the radial direction toward the geometric centerline O of the rotor 20. The flange 17 also includes the flange-base protrusion 19, which extends from the flange base 18 in one and the opposite circumferential directions along the inner periphery 11B of the stator 10. The flange-base protrusion 19 includes the first protruded part 19A at the innermost end of the flange 17 and the second protruded part 19B located radially outward from the first protruded part 19A in a radial direction away from the geometric centerline O of the rotor 20.

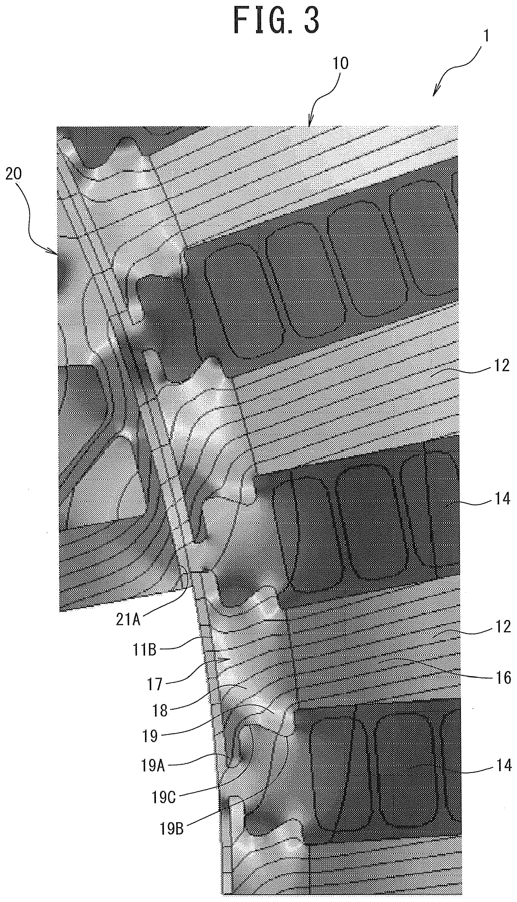

High-frequency magnetic flux-flow lines concentrate in the air gap between the outer periphery 21A of the rotor 20 and near the inner periphery 11B of the stator 11B during motor operation. If the conductors 14 housed in the stator slots 13 are exposed to the high-frequency magnetic flux-flow lines, the currents, i.e., induced currents, are induced. In the electric machine 1, the flanges 17 are not wound by the conductors 14 and, the second protruded parts 19B can retain the conductors 14, keeping the conductors 14 away from the outer periphery 21A of the rotor 20 and the inner periphery 11B of the stator 10. The conductors 14 can be positioned at a position radially outwardly separated from the outer peripheral surface 21A of the rotor 20. FIG. 3 shows how effectively the flanges 17 can reduce the interaction of the high-frequency magnetic flux-flow lines with the conductors 14 and the eddy currents without using a separate part, i.e., a holding member (see JP 2011-130556 A).

Furthermore, adding the flanges 17 will not add to a product cost of the stator 10 because the flanges 17 are not designed as a separate part and they are made of the same material which the stator teeth 12 are made of.

In addition, as readily seen in FIG. 3, the flanges 17 prove to be effective in reducing the torque ripple because the first protruded parts 19A are formed of ferromagnetic metal and they are wider than the associated tooth main bodies 16 to aid in spreading the magnetic field, reducing the torque ripple during motor operation.

As described, the foregoing configuration proves to be effective in reducing the eddy current and torque ripple without adding to a product cost of the electric machine.

In the electric machine 1 according to the preferred embodiment, the flange-base protrusion 19 includes the connection surface 19C extending between the second protruded part 19B and the first protruded part 19A to smoothly connect the second protruded part 19B and the first protruded part 19A, and the connection surface 19C is the concave curved surface recessed inward the flange-base protrusion 19 along the inner periphery 11B of the stator 10.

The concave curved surface 19C provides smooth and continuous connection between the surface of the first protruded part 19A and the surface of the second protruded part 19B. As seen from FIG. 3, this concave curved surface 19C can keep spreading line spacing of the magnetic flux lines passing through the flange-base protrusion 19 by preventing the line spacing from becoming narrow. This proves to be effective in minimizing the magnetic flux density reduction caused by the magnetic saturation and reducing the torque ripple.

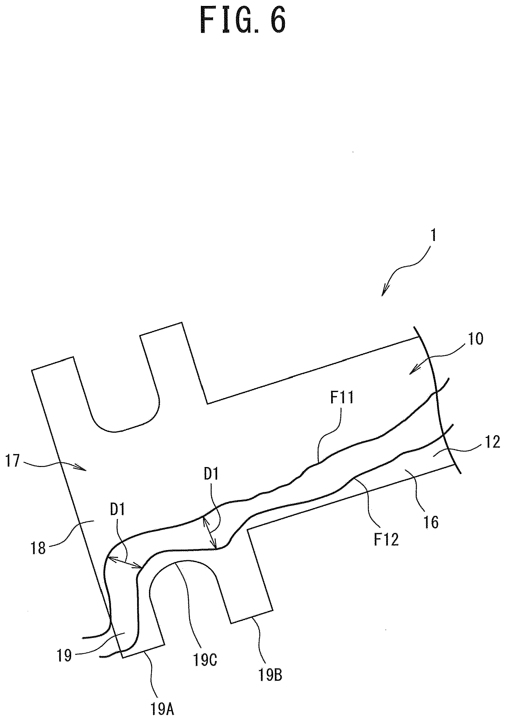

In detail, FIG. 6 shows magnetic flux-flow lines F11 and F12 in the flange-base protrusion 19 with the concave curved connection surface 19C. The magnetic flux-flow lines F11 and F12 take the circumferential direction inward the first protruded part 19A immediately after entering the first protruded part 19A. The concave curved surface 19C enables the magnetic flux-flow lines F11 and F12 to gradually bend in the radial direction outward. This aids in keeping the line spacing D1 between the magnetic flux-flow lines F11 and F12 unchanged, reducing the likelihood of occurrence of the magnetic saturation.

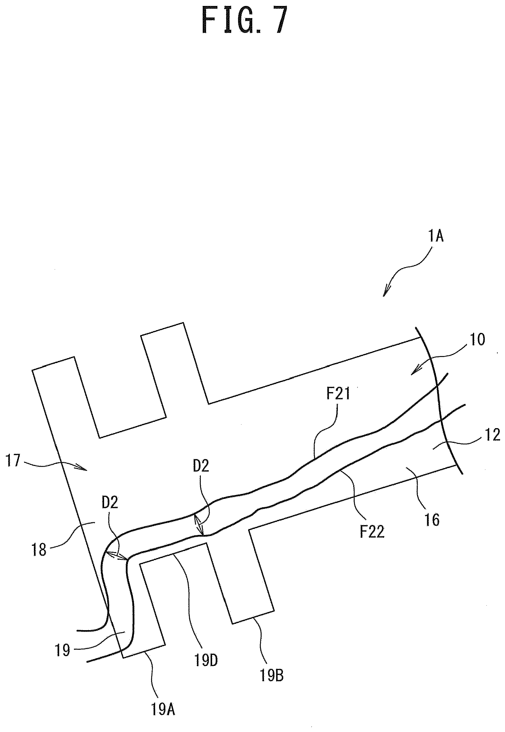

On the other hand, FIG. 7 shows an electric machine 1A according to a less preferred embodiment. In this case, a connecting surface 19D extends linearly in the radial direction to connect a first protruded part 19A and a second protruded part 19B. This connecting surface 19D cannot provide smooth and continuous connection between the first and second protruded parts 19A and 19B because it is orthogonal to the first protruded part 19A and to the second protruded part 19B. In the less preferred embodiment, this connecting surface 19D enables the magnetic flux-flow lines F21 and F22 to abruptly bend in the radial direction outward because it is orthogonal to the first protruded part 19A. Because the line spacing D2 between the magnetic flux lines F21 and F22 is narrow, reducing the likelihood of occurrence the magnetic saturation fails to reach a satisfactory level.

In the electric machine 1 according to the preferred embodiment, the first protruded part 19A extends from the flange base 18 in one and the opposite circumferential directions more than the second protruded part 19B.

As described, the first protruded part 19A extends from the flange base 18 in one and the opposite circumferential directions more than the second protruded part 19B so the first protruded part 19A is wider than the second protruded part 19B, causing an increase in the total amount of magnetic flux in the first produced part 19A during motor operation. This leads to the motor torque increase. It is assumed that the second protruded part 19B is directly exposed to the exterior surface 21A of the rotor 21. In this case, the total amount of magnetic flux in the second produced part 19B is less than that in the first produced part 19A.

In the electric machine 1 according to the preferred embodiment, the first protruded part 19A of one of the stator teeth 12 is spaced apart from the first protruded part 19A of the adjacent stator tooth 12 by a distance L1 that is indicative of a slot opening width of the slot 13, and the second protruded part 19B of the one stator tooth 12 is spaced apart from the second protruded part 19B of the adjacent stator tooth 12 by a distance L2 that is indicative of a necked portion width of the slot 13, wherein $2.9 < L2/L1 < 6.2$.

The above-mentioned arrangement proves to be effective in minimizing the torque ripple rate. The phrase "torque ripple rate" is herein used to mean normalized frequency of torque ripple.

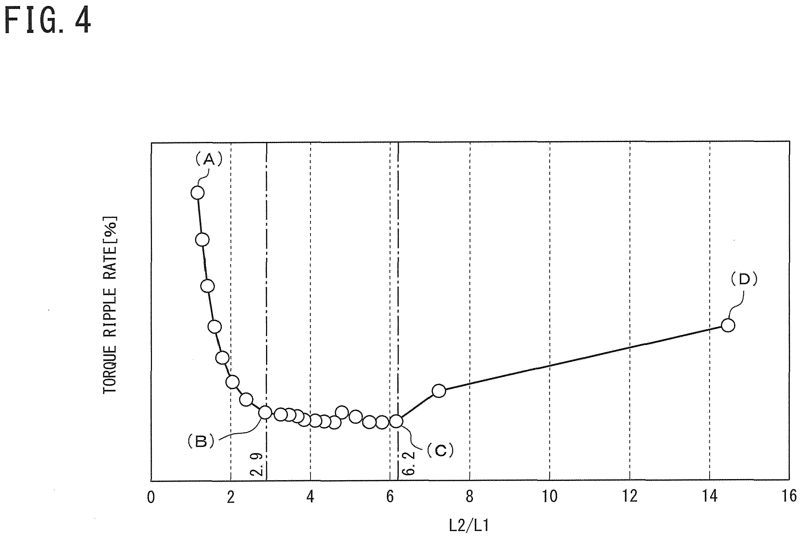

FIG. 4 is a plot showing torque ripple rate for various values of L2/L1. The vertical axis indicates the torque ripple rate, and the horizontal axis indicates various values of L2/L1.

In FIG. 4, the value of torque ripple rate for $L2/L1 = 2.9$ is indicated at (B), and the value of torque ripple rate for $L2/L1 = 6.2$ is indicated at (C). Moreover, the torque ripple rate takes various values within a range with the lower limit indicated at (B) and the upper limit indicated at (A) for various value of L2/L1 not greater than the value 2.9. On the other hand, the torque ripple rate takes various values within a range with the lower limit indicated at (C) and the upper limit indicated at (D) for various values of L2/L1 not less than the value 6.2.

As readily seen from FIG. 4, the torque ripple rate is almost constant in close proximity to 1% for various values of L2/L1 greater than 2.9 but less than 6.2 ($2.9 < L2/L1 < 6.2$). The torque ripple rate significantly deviates from 1% for various values of L2/L1 not greater than 2.9 and not less than 6.2. In detail, the torque ripple rate decreases from the value indicated at (A) to the value indicated at (B) as the ratio L2/L1 increases to the value 2.9, and the torque ripple rate increases from the value indicated at (C) to the value indicated at (D) as the ratio L2/L1 increases from the value 6.2.

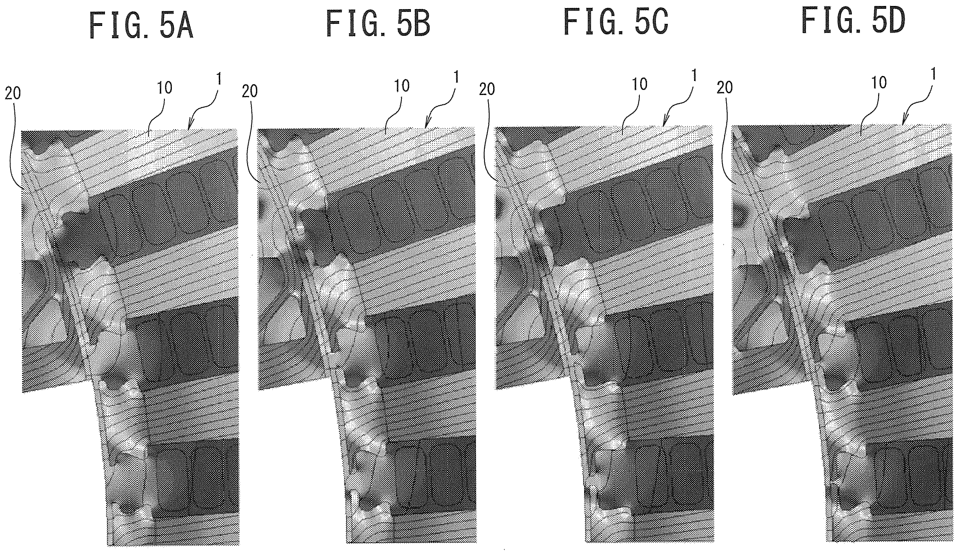

FIGS. 5A to 5D are similar to FIG. 3, with flux distributions for various value of torque ripple rate indicated at (A), (B), (C), and (D) in FIG. 4. It is noted that the slot opening width as indicated by the distance L1 becomes narrower as the magnetic field diagram changes to (A), (B), (C) and (D) in this order. Because the slot opening width L1 is sufficiently narrow for various values of L2/L1 greater than 2.9 but less than 6.2, the change in the total amount of magnetic flux in the first produced part 19A during motor operation is reduced to a satisfactory low level, resulting in the most reduction in torque ripple.

Referring to the flux distributions in FIGS. 5B and 5C, the connecting surface 19C (see FIG. 2) takes a gently curved surface because the amount how much curve changes direction is sufficiently small. This causes the magnetic flux density in the first protruded part 19A to decrease so restrains the occurrence of the magnetic saturation during motor operation. As a result, this makes some contribution to the most reduction in torque ripple.

The larger the ratio L3/L1, the wider the slot 13. This causes the area where the inner end of the conductors 14 housed in the slot 13 opens in a radial inner direction toward the exterior periphery 21A of the rotor 20 through the flange-base protrusion 19 to increase. Increasing this area proves to be effective in restraining a rapid change in the total amount of magnetic flux derived from a change in magnetic flux during motor operation. For the foregoing reason, torque ripple may be reduced appropriately by adjustably increasing the ratio L3/L1.

On the other hand, if L3/L1 is too large, the line spacing between the flux lines in the flange-base protrusion 19 becomes too narrow, causing imbalance of the magnetic field to occur within an area between the second protruded part 19B and the first protruded part 19A. The occurrence of imbalance of the magnetic field increases the likelihood of occurrence of magnetic saturation in the first protruded part 19A, increasing the tendency of torque ripple to increase.

To address the above-mentioned problem, in the electric machine 1 according to the preferred embodiment, the tooth main body 16 of the one stator tooth 12 is spaced apart from the tooth main body 16 of the adjacent stator tooth 12 by a distance that is indicative of a slot width L3 of the slot 13, wherein $9.6 < L3/L1 < 24$.

This arrangement makes it possible to restrain the occurrence of imbalance of the magnetic field within an area between the second protruded part 19B and the first protruded part 19A, reding the torque ripple.

The relationship that 9.6 < L3/L1 < 24 holds within a range bounded by the flux distributions in FIGS. 5B and 5C. This relationship proved to be effective in restraining the occurrence of imbalance of the magnetic field within an area between the second and first protruded parts 19B and 19A, thus reducing the torque ripple.

Incidentally, the electric machine described above is capable of acting as a wind turbine generator or as a motor for machine tools.

The foregoing description is merely illustrative in nature and is in no way intended to limit the disclosure, its application, or uses. The broad teachings of the disclosure can be implemented in a variety of forms. Therefore, while this disclosure includes examples, the true scope of the disclosure should not be so limited since other modifications will become apparent upon a study of the drawings, the specification, and the following claims.

[Description of Reference Numerals]

1...electric machine, 10...stator, 11... stator core, 12...stator teeth, 13...slot, 14...conductors, 15...yoke portion, 16... tooth main body, 17...flange, 18...flange base, 19... flange-base protrusion, 19A...first protruded part, 19B... second protruded part, 19C... connection surface (concave surface), 20...rotor, 21...rotor core, 23A, 23B...permanent magnets, L1... slot opening width, L2... necked portion width, L3...slot width.

**Claims**

1. An electric machine (1) comprising:

   a stator (10) surrounding a rotor (20) and including a stator core (11), the stator core (11) including an annular yoke portion (15) and stator teeth (12) that extend radially inward from the yoke portion (15) to define slots (13) sized to house conductors (14),
   wherein
   each of the stator teeth (12) includes
   a tooth main body (16), and
   a flange (17) extending from the innermost end of the tooth main body (16) in a radial direction toward the geometric centerline of the rotor (20),
   the tooth main bodies (16) of the adjacent two of the stator teeth (12) defining one of the slots (13) therebetween,
   wherein
   the flange (17) includes
   a flange base (18) extending from the innermost end of the tooth main body (16) in the radial direction toward the geometric centerline of the rotor (20) and
   a flange-base protrusion (19) extending from the flange base (18) in one and the opposite circumferential directions along the inner periphery (11B) of the stator (10), and
   wherein
   the flange-base protrusion (19) includes a first protruded part (19A) at the innermost end of the flange (17) and a second protruded part (19B) located radially outward from the first protruded part (19A) in a radial direction away from the geometric centerline of the rotor (20).

2. The electric machine as claimed in claim 1, wherein

   the flange-base protrusion (19) includes a connection surface (19C) extending between the second protruded part (19B) and the first protruded part (19A) to smoothly connect the second protruded part (19B) and the first protruded part (19A), and
   the connection surface (19C) is a concave curved surface recessed inward the flange-base protrusion (19) along the inner periphery (11B) of the stator (10).

3. The electric machine as claimed in claim 1 or 2, wherein
   the first protruded part (19A) extends from the flange base (18) in one and the opposite circumferential directions more than the second protruded part (19B).

4. The electric machine as claimed in claim 2 or 3, wherein
   the first protruded part (19A) of one of the stator teeth (12) is spaced apart from the first protruded part (19A) of the adjacent stator tooth (12) by a distance L1 that is indicative of a slot opening width of the slot (13), and the second protruded part (19B) of the one stator tooth (12) is spaced apart from the second protruded part (19B) of the adjacent stator tooth (12) by a distance L2 that is indicative of a necked portion width of the slot (13), and wherein

$$2.9 < L2/L1 < 6.2$$

5. The electric machine as claimed in claim 4, wherein the tooth main body (16) of the one stator tooth (12) is spaced apart from the tooth main body (16) of the adjacent stator tooth (12) by a distance that is indicative of a slot width L3 of the slot (13), and wherein

$$9.6 < L3/L1 < 24$$

6. The electric machine as claimed in claim 5, wherein the second protruded parts (19B) of the one and the adjacent stator tooth (12) retain the conductors (14) housed in the slot (13) and inhibit unwanted movement of the conductors (14) toward the rotor (20).

## Patentansprüche

1. Eine elektrische Maschine (1) mit:

   einem Stator (10), der einen Rotor (20) umgibt und einen Statorkern (11) enthält, wobei der Statorkern (11) einen ringförmigen Jochabschnitt (15) und Statorzähne (12) enthält, die sich von dem Jochabschnitt (15) radial nach innen erstrecken, um Schlitze (13) zu definieren, die so dimensioniert sind, dass sie Leiter (14) aufnehmen,
   wobei
   jeder der Statorzähne (12)
   einen Zahnhauptkörper (16), und
   einen Flansch (17), der sich von dem innersten Ende des Zahnhauptkörpers (16) in einer radialen Richtung zu der geometrischen Mittellinie des Rotors (20) erstreckt, wobei die Zahnhauptkörper (16) der beiden benachbarten Statorzähne (12) einen der Schlitze (13) dazwischen definieren, umfasst, wobei
   der Flansch (17)
   eine Flanschbasis (18), die sich von dem innersten Ende des Zahnhauptkörpers (16) in der radialen Richtung zu der geometrischen Mittellinie des Rotors (20) erstreckt, und
   einen Flanschbasis-Vorsprung (19), der sich von der Flanschbasis (18) in einer und der entgegengesetzten Umfangsrichtung entlang des inneren Umfangs (11B) des Stators (10) erstreckt, umfasst, und
   wobei
   der Flanschbasis-Vorsprung (19) einen ersten vorstehenden Teil (19A) an dem innersten Ende des Flansches (17) und einen zweiten vorstehenden Teil (19B) aufweist, der radial nach außen von dem ersten vorstehenden Teil (19A) in einer radialen Richtung weg von der geometrischen Mittellinie des Rotors (20) angeordnet ist.

2. Die elektrische Maschine nach Anspruch 1, wobei

   der Flanschbasis-Vorsprung (19) eine Verbindungsoberfläche (19C) aufweist, die sich zwischen dem zweiten vorstehenden Teil (19B) und dem ersten vorstehenden Teil (19A) erstreckt, um den zweiten vorstehenden Teil (19B) und den ersten vorstehenden Teil (19A) gleichmäßig bzw. kontinuierlich zu verbinden, und
   die Verbindungsoberfläche (19C) eine konkav gekrümmte Oberfläche ist, die in den Flanschbasis-Vorsprung (19) entlang dem Innenumfang (11B) des Stators (10) eingetieft ist.

3. Die elektrische Maschine nach Anspruch 1 oder 2, wobei
   der erste vorstehende Teil (19A) sich von der Flanschbasis (18) in einer und der entgegengesetzten Umfangsrichtung weiter erstreckt als der zweite vorstehende Teil (19B).

4. Die elektrische Maschine nach Anspruch 2 oder 3, wobei
   der erste vorstehende Teil (19A) eines der Statorzähne (12) von dem ersten vorstehenden Teil (19A) des benachbarten Statorzahns (12) mit einem Abstand L1 beabstandet ist, der eine Schlitzöffnungsbreite des Schlitzes (13) angibt, und der zweite vorstehende Teil (19B) des einen Statorzahns (12) von dem zweiten vorstehenden Teil (19B) des benachbarten Statorzahns (12) mit einem Abstand L2 beabstandet ist, der eine Breite eines eingeschnürten Abschnitts des Schlitzes (13) angibt, und wobei

$$2,9 < L2/L1 < 6,2.$$

5. Die elektrische Maschine nach Anspruch 4, wobei der Zahnhauptkörper (16) des einen Statorzahns (12) von dem Zahnhauptkörper (16) des benachbarten Statorzahns (12) mit einem Abstand beabstandet ist, der eine Schlitzbreite L3 des Schlitzes (13) angibt, und wobei

$$9,6 < L3/L1 < 24.$$

6. Die elektrische Maschine nach Anspruch 5, wobei die zweiten vorstehenden Teile (19B) des einen und des benachbarten Statorzahns (12) die in dem Schlitz (13) untergebrachten Leiter (14) zurückhalten und eine unerwünschte Bewegung der Leiter (14) zu dem Rotor hin (20) verhindern.

## Revendications

1. Machine (1) électrique comprenant :

   un stator (10) entourant un rotor (20) et comprenant un noyau (11) de stator, le noyau (11) de stator ayant une partie (15) annulaire de culasse et des dents (12) de stator, qui s'étendent radialement vers l'intérieur, à partir de la partie (15) annulaire de culasse pour définir des encoches (13) dimensionnées pour loger des conducteurs (14),
   dans laquelle
   chacune des dents (12) du stator comprend un corps (16) principal de dent, et
   une bride (17) s'étendant de l'extrémité la plus à l'intérieur du corps (16) principal de dent, dans une direction radiale, en direction de la ligne de centre géométrique du rotor (20), les corps (16) principaux de dent des deux voisines des dents (12) du stator définissant entre eux l'une des encoches (13),
dans laquelle
la bride (17) comprend
une base (18) de bride s'étendant de l'extrémité la plus à l'intérieur du corps (16) principal de dent, dans la direction radiale, en direction de la ligne de centre géométrique du rotor (20), et une saillie (19) de base de bride s'étendant à partir de la base (18), dans l'un des sens circonférentiels et dans le sens circonférentiel opposé, le long de la périphérie (11B) intérieure du stator (10), et
dans laquelle
la saillie (19) de base de bride comprend une première partie (19A) en saillie à l'extrémité la plus à l'intérieur de la bride (17) et une deuxième partie (19B) en saillie disposée radialement vers l'extérieur à partir de la première partie (19A) en saillie, dans une direction radiale s'éloignant de la bride centrale géométrique du rotor (20).

2. Machine électrique suivant la revendication 1, dans laquelle

la saillie (19) de base de bride comprend une surface (19C) de liaison s'étendant entre la deuxième partie (19B) en saillie et la première partie (19A) en saillie pour relier en douceur la deuxième partie (19B) en saillie et la première partie (19A) en saillie, et
la surface (19C) de liaison est une surface concave en retrait vers l'intérieur de la saillie (19) de base de bride le long de la périphérie (11B) intérieure du stator (10).

3. Machine électrique suivant la revendication 1 ou 2, dans laquelle
la première partie (19A) en saillie s'étend à partir de la base (18) de bride dans un sens et dans le sens circonférentiel opposé sur plus que la deuxième partie (19B) en saillie.

4. Machine électrique suivant la revendication 2 ou 3, dans laquelle

la première partie (19A) en saillie de l'une des dents (12) du stator est à distance de la première partie (19A) en saillie de la dent (12) du stator voisine d'une distance L1, qui est indicatrice d'une largeur d'ouverture de l'encoche (13), et
la deuxième partie (19B) en saillie de la une dent (12) du stator est à distance de la partie (19B) en saillie de la dent (12) du stator voisine d'une distance L2, qui est indicatrice d'une largeur d'une partie de col de l'encoche (13), et dans laquelle

$$2,9 \ <L2/L1<6,2.$$

5. Machine électrique suivant la revendication 4, dans laquelle

le corps (16) principal de dent de la une dent (12) du stator est à distance du corps (16) de dent de la dent (12) du stator voisine d'une distance, qui est indicatrice d'une largeur L3 de l'encoche (13), et
dans laquelle

$$9,6 \ <L3/L1<24.$$

6. Machine électrique suivant la revendication 5, dans laquelle
les deuxièmes parties (19B) en saillie de la une et de la dent (12) du stator voisine retiennent les conducteurs (14) logés dans l'encoche (13) et inhibent tout mouvement non voulu des conducteurs (14) en direction du rotor (20).

FIG. 1

EP 4 089 883 B1

FIG. 2

# FIG. 3

FIG. 4

TORQUE RIPPLE RATE[%]

L2/L1

(A)

(B)

(C)

(D)

2.9

6.2

0    2    4    6    8    10    12    14    16

EP 4 089 883 B1

FIG. 5A      FIG. 5B      FIG. 5C      FIG. 5D

EP 4 089 883 B1

# FIG. 6

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011130556 A
- US 2013342070 A1
- EP 3457536 A1
- WO 2008044703 A1